# FASCICULE DE BREVET EUROPEEN

(11) **EP 2 541 732 B1**
(45) Date de publication et mention de la délivrance du brevet: **18.09.2019**
(21) Numéro de dépôt: 11005241.2
(22) Date de dépôt: 28.06.2011
(51) Int. Cl.: H02J 13/00, H02J 3/14, G06Q 50/00, G01D 4/00

(54) **Dispositif et procédé de gestion d'une installation électrique signalant le tarif**
Vorrichtung und Verfahren zur Steuerung einer elektrischen Anlage, die den Preis anzeigt
Device and method for managing an electric facility indicating the price

(43) Date de publication de la demande: 02.01.2013
(73) Titulaire: HAGER CONTROLS (Société par Actions Simplifiée), 67700 Saverne (FR)
(72) Inventeur: Thomas, Christian, 78240 Chambourcy (FR)
(74) Mandataire: Nuss, Laurent

(56) Documents cités:
- EP-A1- 2 159 749
- WO-A1-2011/048181
- WO-A2-2008/025939
- DE-A1- 19 850 496
- US-A- 5 430 430
- US-A- 5 635 895
- US-A1- 2005 060 107
- US-A1- 2008 052 017
- US-A1- 2008 224 892
- US-A1- 2010 238 003

## Description

La présente invention relève du domaine des installations de fourniture d'électricité, et a plus particulièrement pour objet un dispositif de gestion d'une installation de fourniture d'électricité pour des locaux, tels que des locaux d'habitation, ainsi qu'un procédé de gestion d'une telle installation, intégrant une fonction d'information de tarif.

La fourniture d'énergie à une installation électrique, du type installation électrique domestique, se fait à partir d'un réseau commun, alimentant plusieurs installations électriques, comme un quartier, une ville ou plus encore. Le réseau commun est bien souvent géré par une collectivité territoriale, voire le gouvernement national. Il en va parfois de même de la fourniture d'énergie sur ce réseau commun.

La gestion de l'énergie électrique circulant sur ce réseau commun est problématique. En effet, la consommation d'énergie varie beaucoup dans le temps, c'est-à-dire au fil de la journée, ou au fil de l'année. Pour autant, les sources d'énergies alimentant ce réseau commun, du type centrale nucléaire, hydroélectrique, photoélectrique ou autre, ne peuvent être calibrées pour les pics de consommation, pour des questions évidentes d'efficience en dehors de ces pics. Les sources d'énergies peuvent, en outre, avoir des puissances mal coordonnées avec les consommations : les centrales photoélectriques ou les éoliennes fournissent une puissance qui varie dans le temps, et de façon souvent non synchronisée avec la consommation. Enfin, le stockage de l'énergie électrique lors de période de sous-consommation est très difficile à l'échelle du réseau commun.

Stopper la fourniture d'énergie à une ou plusieurs installations électriques pour éviter une surconsommation est une solution très peu satisfaisante pour l'utilisateur de l'installation électrique. Une solution alternative est d'inciter l'utilisateur de l'installation électrique à décaler ses consommations dans le temps, notamment pour que la puissance électrique globale sur le réseau commun soit la plus constante possible. Une façon classique est d'augmenter le tarif de l'énergie fournie dans des périodes lors desquelles il est souhaité que l'utilisateur réduise sa consommation.

L'installation électrique est reliée au réseau commun par un compteur central, qui intègre l'information du tarif en vigueur, c'est-à-dire l'information instantanée du tarif de l'énergie. Il lui est donc possible non seulement de fournir l'électricité à l'installation, mais aussi de fournir l'information du tarif en cours. Le compteur central est néanmoins souvent difficile d'accès pour l'utilisateur lorsqu'il souhaite faire usage d'un de ses appareils électriques, et, surtout, même s'il affiche la valeur du tarif en vigueur, il est peu souhaitable que l'utilisateur ait à se renseigner sur ce tarif en se déplaçant jusqu'au compteur central, à chaque fois qu'il souhaite consommer de l'énergie.

Bien qu'il soit envisageable d'avoir recours à des solutions d'affichages de tarif dans le cadre d'applications domotiques complexes, faisant ainsi appel à des écrans ou des réseaux d'information type internet ou téléphonie, ce type de solutions peut toutefois se révéler d'un coût prohibitif, et peu ergonomique pour des utilisateurs qui ne sont pas familiers avec des appareils informatiques, du type ordinateur ou smartphone.

Le document EP2159749 décrit un dispositif selon le préambule de la revendication 1.

La présente invention a pour but de pallier une partie et préférentiellement tous les inconvénients précités, et vise ainsi notamment à faire connaître à un utilisateur l'information tarifaire de façon simple, ergonomique, et économique, et ce, éventuellement aussi, sans modifier l'installation électrique de façon notoire et coûteuse, de sorte qu'il puisse lui-même décider ou non de l'usage immédiat d'un appareil électrique.

A cet effet, l'invention a pour objet un dispositif de gestion d'une installation de fourniture d'électricité selon la revendication 1.

L'invention a aussi pour objet un procédé de gestion d'une installation de fourniture d'électricité pour des locaux, selon la revendication 7.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
- la figure 1 est une représentation graphique d'un composant autonome d'un dispositif selon l'invention ;
- la figure 2 est une représentation d'une prise gigogne d'un dispositif selon l'invention ;

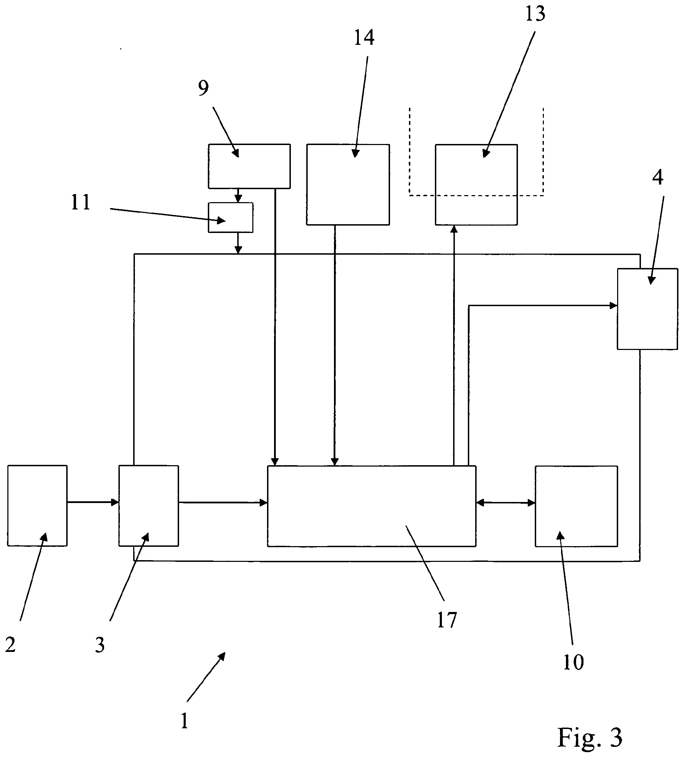

- la figure 3 illustre l'interaction entre les composants dans un mode de réalisation du dispositif, les traits discontinus illustrant une transmission d'énergie électrique que permet le dispositif ;
- la figure 4 illustre le positionnement du dispositif par rapport à des locaux, et

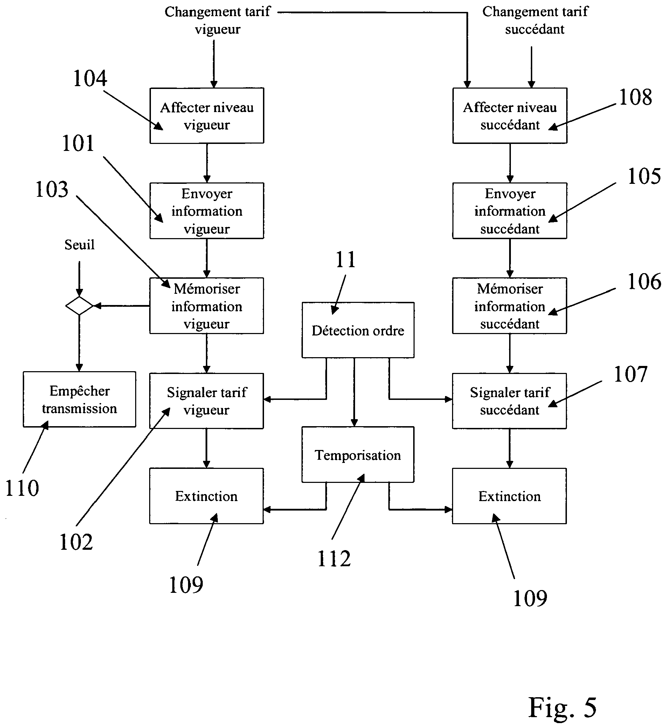

- la figure 5 est une représentation synoptique d'un procédé selon l'invention.

L'invention a donc pour objet un dispositif de gestion 1 d'une installation de fourniture d'électricité pour des locaux 16, tels que des locaux d'habitation. L'installation peut donc être une installation électrique domestique. Selon l'invention, le dispositif de gestion 1 comprend
- un émetteur 2, situé au niveau d'un compteur central 5 de ladite installation et apte à envoyer une information de tarif en vigueur 101, avec ou sans fil,
- au moins un récepteur 3, situé dans lesdits locaux 16, apte à recevoir ladite information, ainsi qu'
- au moins un indicateur 4 apte à signaler le tarif en vigueur 102, dans lesdits locaux 16, notamment au niveau dudit au moins un récepteur 3,
le tarif en vigueur provenant du compteur central 5.

Il est ainsi possible de faire connaître le tarif en vigueur à l'utilisateur, à l'intérieur des locaux 16, et donc dans une zone qui est plus proche de l'appareil électrique à utiliser que ne l'est le compteur central 5. En effet, le compteur central 5 est généralement hors des locaux 16, dans une cave, un couloir, un coffret souvent peu accessible, ou autres, et, dans tous les cas, le compteur central 5 est unique alors que les appareils électriques sont multiples et dispersés dans les locaux. Il est donc peu pratique pour l'utilisateur, à chaque fois qu'il souhaite utiliser un appareil, de consulter le tarif en vigueur au niveau du compteur central 5.

Du point de vue de la fourniture d'électricité depuis le réseau commun, l'installation électrique forme une seule entité, à laquelle l'électricité est fournie à travers le compteur central 5, qui forme ainsi le point de jonction unique entre le réseau commun et l'installation électrique. Du point de vue de l'organisme qui fournit l'électricité, l'installation électrique en question est donc une entité unique.

L'émetteur 2 peut être directement intégré dans le compteur central 5, mais il peut aussi, comme il sera décrit plus tard, être intégré dans un bloc rapporté 6, lié mécaniquement au compteur central 5.

La communication entre l'émetteur 2 et le au moins un récepteur 3 peut être filaire ou non, bidirectionnelle ou non, l'avantage d'une communication non filaire et monodirectionnelle étant toutefois une plus grande simplicité du dispositif de gestion 1 ainsi que de sa mise en place. Bien entendu, le dispositif de gestion 1 peut aussi comprendre un ou plusieurs répéteurs entre l'émetteur 2 et l'au moins un récepteur 3.

Le au moins un récepteur 3 est situé dans les locaux 16, et, de préférence, à proximité immédiate d'un indicateur 4 avec lequel il coopère : le récepteur 3 reçoit donc une information de tarif en vigueur, et ce tarif en vigueur est ensuite signalé grâce à un indicateur 4 avec lequel le récepteur 3 coopère. Comme il sera encore décrit plus loin, cette coopération entre un récepteur 3 et un indicateur 4 se fait préférentiellement par le biais d'un processeur 17 ou microcontrôleur, recevant à son tour l'information de la part du récepteur 3, et pilotant l'état de l'indicateur 4. Par conséquent, ces trois composants, à savoir le processeur 17, le récepteur 3 et l'indicateur, sont préférentiellement intégrés dans un même élément physique qui sera décrit ultérieurement, le dispositif de gestion 1 pouvant comprendre une pluralité de tels éléments physiques communicant chacun avec l'émetteur 2.

Selon une caractéristique additionnelle possible, l'émetteur 2 est intégré dans un bloc rapporté 6, rapporté au compteur central 5 et apte à réceptionner, avec ou sans fil, les données de tarif fournies par ce dernier, ainsi qu'à affecter un niveau tarifaire à un tarif, le bloc rapporté 6 et le compteur central 5 pouvant communiquer par une liaison filaire ou par une liaison sans fil, du type infrarouge. Cela contribue à pouvoir adapter le dispositif de gestion 1 sur une installation électrique existante, sans devoir mettre en place un compteur central 5 intégrant ledit émetteur 2. En effet, une alternative serait que le compteur central 5 intègre l'émetteur 2, ce qui présenterait alors l'avantage de réduire le nombre de composants.

Selon une autre caractéristique additionnelle possible, l'au moins un récepteur 3 et l'au moins un indicateur 4 sont indépendants d'un consommateur électrique 7, et sont ainsi notamment montés ensemble l'un et l'autre dans un composant autonome 8 déplaçable, tel qu'un patch ou une prise gigogne, dans un socle électrique mural, ou encore dans une console centrale de gestion d'un réseau domotique. Un consommateur électrique 7 est ici un appareil de l'installation électrique impactant de façon non négligeable la consommation de ladite installation. Par exemple, une console centrale de gestion d'un réseau domotique étant essentiellement un appareil de communication, sa consommation électrique impacte de façon négligeable celle de l'installation.

Ainsi, selon cette caractéristique, l'au moins un récepteur 3 et l'au moins un indicateur 4 ne sont pas montés dans un appareil consommant de l'énergie électrique de puissance, du type sèche linge, lave vaisselle, machine à laver, radiateur électrique, et n'en font donc pas partie intégrante, ce qui présente l'avantage de pouvoir mettre en service le dispositif de gestion 1 sans avoir à changer les différents consommateurs électriques 7. En effet, alternativement, et dans le but de réduire le nombre total de composants ainsi que le risque de perdre une pièce dans laquelle se trouvent un récepteur 3 et un indicateur 4, le au moins récepteur 3 et le au moins un indicateur 4 peuvent être montés dans un consommateur électrique 7 de l'installation, du type machine à laver, sèche linge, radiateur électrique, ballon d'eau chaude, c'est-à-dire un des appareils électriques impactant de façon non négligeable la consommation de l'installation.

L'avantage de l'intégration d'un récepteur 3 et d'un indicateur 4 dans un composant autonome 8, et surtout s'il est aisément déplaçable, est de pouvoir facilement le positionner à proximité d'un consommateur électrique 7 standard, nécessitant une énergie électrique de puissance, puisqu'un tel consommateur peut avoir de grands impacts sur la quantité totale d'énergie consommée par l'installation électrique, et donc la facture ultérieure pour l'utilisateur.

Dans un mode de réalisation avantageux, le dispositif de gestion 1 comprend ainsi un émetteur 2, au niveau du compteur central 5, et une pluralité de composants autonomes 8, chacun aisément déplaçable et intégrant au moins, d'une part, un récepteur 3, recevant une information de tarif en vigueur de la part de l'émetteur 2, cette information provenant du compteur central 5, duquel fait éventuellement partie l'émetteur 2, et, d'autre part, un indicateur 4, grâce auquel l'utilisateur est informé du tarif.

Il est alors possible d'installer ces composants autonomes 8 aisément déplaçables à proximité de chacun des principaux consommateurs électriques 7, ce qui permet à l'utilisateur, lorsqu'il souhaite utiliser l'un d'entre eux, de ne pas avoir à se déplacer jusqu'au compteur central 5, mais d'avoir directement l'information du tarif en vigueur, ce qui lui permet de décider de l'utilisation ou non du consommateur électrique 7.

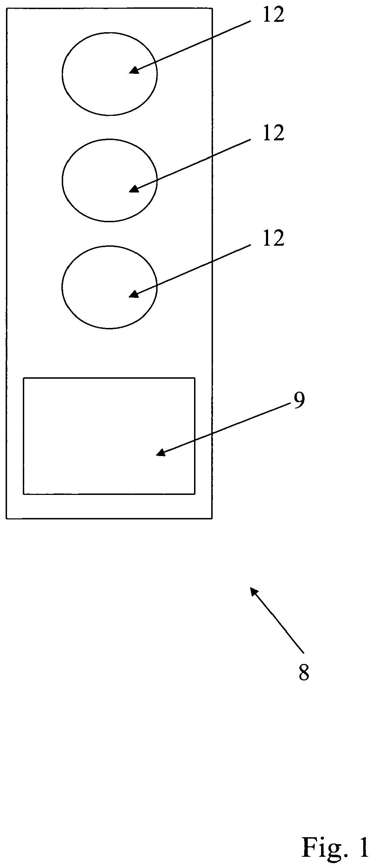

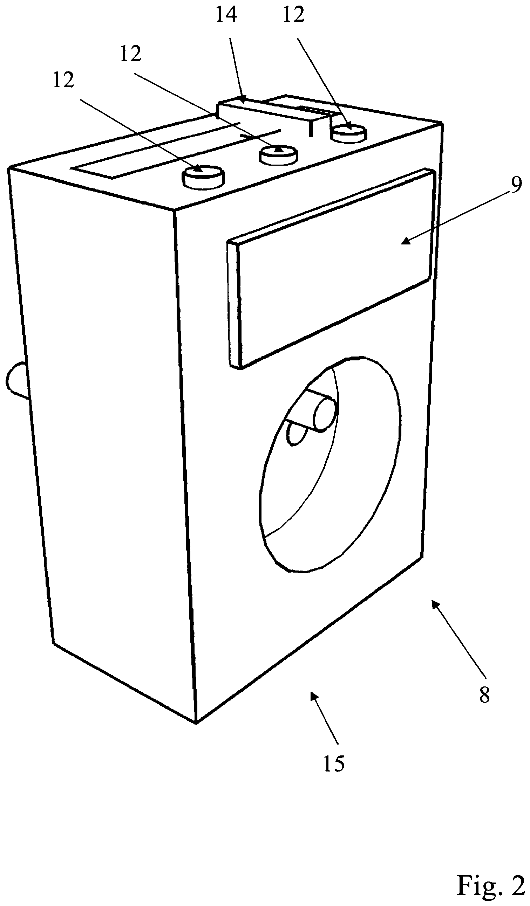

L'intégration dans un composant autonome 8 aisément déplaçable est illustrée aux figures 1 et 2. La figure 2 illustre plus particulièrement l'intégration sous la forme d'une prise gigogne, comprenant donc aussi une fonction de transmission d'énergie électrique, décrite plus loin.

Dans des installations plus complexes, il est aussi envisageable que l'information de tarif soit fournie à la console centrale de gestion du réseau domotique des locaux 16. Un tel réseau domotique a pour rôle de veiller au fonctionnement d'un ensemble d'appareils électriques, tels que volants roulants, chaudière, radiateurs, ou autres, et fait généralement appel à une console centrale, comprenant souvent un écran tactile, ou un écran et des boutons. Une telle console centrale a bien évidemment des ports de connexion à un réseau électrique d'information, constituant le réseau domotique, et l'émetteur 2, voire le ou un récepteur 3, peut être un appareil de ce réseau d'information. Alternativement, la console centrale peut directement intégrer le ou un récepteur 3, ou encore, pour former le récepteur 3, utiliser un moyen de réception sans fil qu'elle comprend et dédié classiquement à d'autres échanges d'information. Il est alors possible d'exploiter, au niveau de la console centrale, l'information de tarif provenant du compteur central 5, et de l'utiliser pour informer l'utilisateur, ou encore pour piloter des consommateurs électriques 7.

Toutefois, une console centrale de gestion d'un réseau domotique, ou encore un socle mural, ne peut pas être considéré comme aisément déplaçable, compte tenu, entre autres, des nombreuses connexions filaires, des nombreuses opérations manuelles nécessaires à l'éventuel démontage et du temps important nécessaire à un éventuel déplacement.

Selon une autre caractéristique additionnelle possible, l'émetteur 2 et le au moins un récepteur 3 sont aptes à communiquer ensemble sans fils, ce qui permet d'éviter de devoir installer des conducteurs filaires pour l'échange d'information entre l'émetteur 2 et le ou chaque récepteur 3. Il est ainsi possible de faciliter la mise en service du dispositif de gestion 1. En effet, alternativement, il est possible de réaliser une communication filaire d'information entre l'émetteur 2 et le au moins un récepteur 3, ce qui peut bien sûr garantir la qualité de l'échange d'information : un socle électrique mural peut par exemple intégrer un récepteur et un indicateur, l'échange d'information se faisant alors, par exemple, sur le principe des courants porteurs en ligne pour éviter de multiplier les conducteurs.

Dans certains modes de réalisation, le dispositif de gestion 1 comprend au moins un composant autonome 8, aisément déplaçable, intégrant le au moins un récepteur 3, une cellule photovoltaïque 9, une mémoire 10, un accumulateur électrique 11 ainsi qu'au moins une diode 12 formant le ou un indicateur 4, et préférentiellement trois diodes 12 de couleurs différentes aptes à indiquer un niveau tarifaire grâce à leur éclairement et à un code couleur ergonomique pour un utilisateur. Un tel composant autonome 8, illustré aux figures 1 ou 2, ne présente préférentiellement aucune connexion filaire, ce qui le rend très facilement déplaçable, même après une première mise en place, et il est aussi possible de le positionner en des endroits très différents, puisqu'il n'est pas nécessaire d'y amener des conducteurs filaires. L'utilisation d'une cellule photovoltaïque 9 et d'un accumulateur électrique 11 lui évite, d'une part, une connexion filaire pour l'alimenter en énergie électrique, et, d'autre part, l'utilisation d'une pile non rechargeable, qui a une durée de vie limitée.

Un tel composant autonome 8 comprend aussi préférentiellement un processeur 17 ou un microcontrôleur, pour réaliser certaines fonctions logiques, comme l'extinction ou l'allumage sous condition de l'indicateur 4, ou encore le traitement de l'information reçue par le récepteur 3, ou, comme il sera décrit plus loin, le pilotage d'un commutateur électrique 13 conditionnant une transmission d'énergie électrique, préférentiellement destinée à l'un des principaux consommateurs électriques 7 dans l'installation électrique.

Selon une caractéristique additionnelle possible, le au moins un composant autonome 8 présente une surface adhésive à l'opposé du au moins un indicateur 4 qu'il comprend, lui permettant ainsi d'être fixé dans l'environnement immédiat d'un consommateur électrique 7, voire contre une de ses parois, de sorte à être aisément visible par un utilisateur dudit consommateur électrique 7. Il est ainsi très facile de fixer un composant autonome 8, et ce sans outil, même contre une surface dans laquelle il ne serait pas conseillé d'insérer une vis. Un tel composant autonome 8 peut ainsi prendre la forme d'un sticker, ou patch autocollant. A nouveau, un consommateur électrique 7 est ici un appareil électrique impactant de façon non négligeable la consommation globale de l'installation électrique. Il peut aussi s'agir d'un appareil destiné à transmettre une grande énergie électrique, comme par exemple un socle électrique mural destiné à la recharge d'un véhicule électrique.

Dans certains modes de réalisation, le dispositif de gestion 1 est, en outre, apte à transmettre de l'énergie électrique et comprend au moins un commutateur électrique 13, tel qu'un relais ou un commutateur de puissance statique, conditionnant une transmission électrique, ainsi qu'au moins un moyen de réglage 14 d'un seuil tarifaire au-dessus duquel le au moins un commutateur électrique 13 est placé dans une position dans laquelle la transmission qu'il conditionne est impossible, notamment dès lors que, en outre, le courant transmis est nul. Il est ainsi possible pour l'utilisateur de définir par avance un seuil tarifaire au-delà duquel il sera impossible, pour le dispositif de gestion 1, de transmettre de l'énergie électrique. Seule la modification volontaire du seuil tarifaire par l'utilisateur pourra alors permettre la transmission. A la figure 2, le moyen de réglage 14 correspond à un simple curseur, qui peut être placé en vis-à-vis d'une diode 12 indiquant le seuil tarifaire sous lequel la transmission est possible.

Dans le cadre d'un traitement numérique logique, le seuil tarifaire peut être stocké dans la ou une mémoire 10, d'autres façons de tenir compte du seuil tarifaire pour la transmission étant possibles. Bien entendu, le dispositif de gestion 1 peut aussi être apte à transmettre de l'énergie électrique sans pour autant avoir de commutateur électrique 13 pour conditionner cette transmission. La transmission électrique se fait préférentiellement au niveau d'un composant autonome 8 que comprend le dispositif de gestion 1.

Le seuil tarifaire peut être qualitatif, c'est-à-dire basé sur les niveaux tarifaires déjà mentionnés, ou basé directement sur la valeur monétaire du tarif.

Lorsque le dispositif de gestion 1 transmet de l'énergie et que le tarif de cette énergie devient supérieur au seuil défini, il peut être néfaste voire dangereux de stopper cette transmission. Il est donc préférable d'attendre la fin de la transmission pour mettre en oeuvre le commutateur électrique 13 de sorte qu'il empêche le démarrage d'une transmission d'énergie électrique.

Selon une caractéristique additionnelle possible, le dispositif de gestion 1, comme le montre la figure 2, comprend au moins un bloc électrique 15 à double enfichage, apte à transmettre de l'énergie électrique, du type prise gigogne ou bloc multiprise, intégrant le au moins un récepteur 3, le au moins un indicateur 4, le au moins un commutateur électrique 13, et le au moins un moyen de réglage 14. Ce bloc électrique 15 à double enfichage présente ainsi des connecteurs mâles pour sa connexion à un socle mural standard, ainsi que des connecteurs femelles, pour sa réception, au même titre que ledit socle mural, d'une fiche électrique standard. Une telle prise gigogne présente l'avantage de pouvoir être aisément mise en place pour l'alimentation d'un consommateur électrique 7 particulier, par exemple un sèche linge ou un appareil de recharge de véhicule électrique, très consommateurs en énergie électrique, et ce sans modifier l'installation électrique.

Dans encore d'autres modes de réalisation, le au moins un récepteur 3 ainsi que l'au moins un indicateur 4 sont intégrés dans un socle électrique mural que comprend le dispositif de gestion 1 et destiné à recevoir une fiche électrique standard. Ce socle mural intègre préférentiellement aussi un commutateur électrique 13 et fonctionne de façon équivalente à celle décrite plus haut.

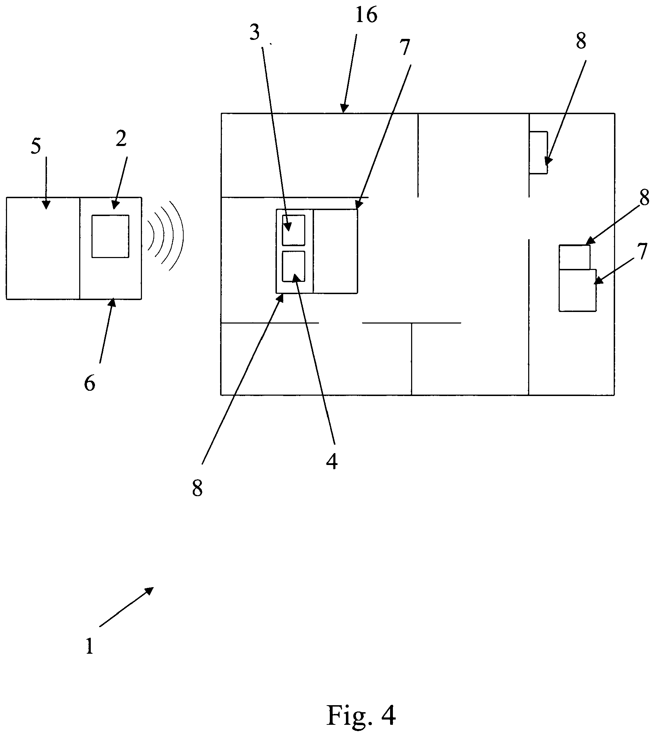

Ainsi, le dispositif de gestion 1 peut comprendre une pluralité de composants autonomes 8, chacun comportant un récepteur 3, un processeur 17, une mémoire 10, un indicateur 4 sous la forme d'un triplet de diodes 12 de couleurs différentes, un accumulateur électrique 11, une cellule photovoltaïque 9, certains de ces composants autonomes 8 intégrant, en outre, des moyens apte à transmettre de l'énergie électrique, éventuellement avec un commutateur électrique 13 piloté par le processeur 17, sur la base du tarif en vigueur et du seuil tarifaire mémorisé. Le dispositif de gestion 1 peut aussi comprendre, en outre, un récepteur 3 pour l'exploitation de l'information de tarif par une console centrale de gestion d'un réseau domotique. Comme le montre la figure 4, le dispositif de gestion 1 peut donc consister en un réseau de composants communicant entre eux, dédié, au moins pour une partie d'entre eux, à l'indication du tarif pour l'énergie électrique, et ce à différents endroits dans les locaux 16, avec une éventuelle fonction de transmission de puissance électrique conditionnée par le niveau tarifaire et un seuil tarifaire au-dessus duquel la transmission est impossible.

L'invention a aussi pour objet un procédé de gestion d'une installation de fourniture d'électricité pour des locaux 16, tels que des locaux d'habitation. Ce procédé de gestion permet le pilotage du dispositif de gestion 1 précédemment décrit. Selon l'invention, ce procédé de gestion comprend des étapes consistant à :
- envoyer une information de tarif en vigueur 101, avec ou sans fil, depuis un émetteur 2 situé au niveau d'un compteur central 5 de ladite installation et à au moins un récepteur 3 situé dans lesdits locaux 16, et
- signaler le tarif en vigueur 102, dans lesdits locaux 16, notamment au niveau dudit au moins un récepteur 3, à l'aide d'au moins un indicateur 4,
ledit tarif en vigueur provenant dudit compteur central 5.

Il est ainsi possible de faire connaître à l'utilisateur, alors que celui-ci se trouve dans les locaux 16 et éventuellement à proximité immédiate d'un consommateur électrique 7, le tarif en vigueur pour ladite énergie électrique. Préférentiellement, signaler le tarif en vigueur 102, mais aussi se fait en utilisant un code couleur qualitatif et ergonomique, qu'un utilisateur peut interpréter sans formation spécifique. Il en va de même pour l'étape consistant à signaler le tarif succédant au tarif en vigueur 107 et qui sera décrite plus loin.

Bien entendu, comme la signalisation du tarif à l'utilisateur a pour but de l'aider à maîtriser sa consommation d'énergie électrique et donc le montant de sa facture, cette signalisation doit se faire prioritairement à proximité des consommateurs électriques 7 nécessitant le plus d'énergie électrique.

Selon une caractéristique additionnelle possible, l'envoi d'une information de tarif en vigueur 101 est réalisé dès lors que le tarif en vigueur change, le procédé comprenant, en outre, une étape ultérieure consistant à mémoriser l'information de tarif en vigueur 103. L'utilisateur peut alors être informé de façon très réactive du tarif en vigueur, et ce sans multiplier les échanges d'informations entre l'émetteur 2 et le au moins un récepteur 3. Le changement de tarif en vigueur est donc préférentiellement détecté par le dispositif de gestion 1. Au niveau de l'émetteur 2, lorsque celui-ci est intégré dans un bloc rapporté 6, le dispositif de gestion 1 comprend donc un élément apte à détecter un changement de tarif en vigueur et à ordonner l'envoi d'information par l'émetteur 2. Lorsque l'émetteur 2 est intégré au compteur central 5, ce dernier peut, de lui-même, ordonner l'envoi d'information dès changement du tarif.

Selon une caractéristique additionnelle possible, le procédé de gestion comprend une étape consistant à affecter un niveau tarifaire au tarif en vigueur 104, l'ensemble des tarifs possibles étant découpé en un nombre restreint de niveaux tarifaires, notamment entre deux et cinq, et préférentiellement trois. Il est ainsi possible d'indiquer le tarif de façon ergonomique pour un utilisateur normal, grâce à des niveaux tarifaires qualitatifs, alors que le nombre de tarifs différents peut être très élevé. Le recours à trois niveaux tarifaires permet une bonne ergonomie, puisque l'utilisateur sera informé et conseillé quant à sa consommation, de façon simple et aisément compréhensible. Un premier niveau tarifaire peut ainsi correspondre à une première extrême, peu onéreuse et donc lors de laquelle l'utilisation des consommateurs électriques 7 est conseillée. L'autre extrême peut correspondre à des tarifs onéreux, et donc à des périodes lors desquelles l'utilisation d'un consommateur électrique 7 est déconseillée. Un niveau tarifaire intermédiaire est prévu entre ces deux extrêmes. Grâce à cette transformation de l'information, c'est-à-dire la transformation faite, lors de cette étape, du tarif en vigueur en un niveau tarifaire qualitatif parmi trois possibles, l'utilisateur n'a pas besoin de connaître l'ensemble des tarifs possibles pour évaluer la pertinence d'une consommation immédiate.

Selon une caractéristique additionnelle possible, l'étape consistant à signaler le tarif en vigueur 102 fait appel à au moins une diode 12, et revient notamment à allumer la au moins une diode 12 représentant le niveau tarifaire du tarif en vigueur selon un code de couleur ergonomique pour un utilisateur, tel que vert pour un niveau tarifaire peu onéreux, rouge pour un niveau tarifaire très onéreux, et orange pour un niveau tarifaire intermédiaire. Cela permet ainsi de signaler le tarif en vigueur de façon ergonomique, puisqu'une diode 12 de couleur particulière parmi plusieurs autres diodes 12, voire une couleur particulière parmi plusieurs pour la même diode 12, est utilisée pour un niveau tarifaire particulier. De façon classique, correspondant quasiment à des automatismes chez l'utilisateur et donc ne nécessitant aucune formation de celui-ci, un niveau tarifaire très onéreux sera indiqué par une diode 12 rouge, un niveau tarifaire peu onéreux sera indiqué par une diode 12 verte et un niveau tarifaire intermédiaire sera indiqué par une diode 12 orange. En outre, l'utilisation de diode 12 limite la consommation d'énergie électrique de l'au moins un indicateur 4, et donc, le cas échéant, du composant autonome 8 sur lequel la au moins une diode 12 formant le au moins un indicateur 4 est éventuellement embarquée, ce qui facilite l'élimination d'une connexion filaire pour l'alimentation électrique.

Selon une autre caractéristique additionnelle possible, l'étape consistant à affecter un niveau tarifaire au tarif en vigueur 104 est réalisé préalablement à l'étape consistant à envoyer une information de tarif en vigueur 101, ladite information de tarif en vigueur envoyée correspondant alors audit niveau tarifaire. Cela présente l'avantage de réduire la complexité de l'appareil dans lequel le processeur 17 ou microcontrôleur est monté ainsi que sa consommation en énergie, puisqu'aucune étape de transformation d'information n'est nécessaire après l'émission par l'émetteur 2 : composant autonome 8 tel que sticker ou prise gigogne, consommateur électrique 7, console centrale de gestion domotique, socle électrique ou autre. Transformer l'information, c'est-à-dire affecter un niveau tarifaire au tarif en vigueur 104, se fait au niveau du composant intégrant l'émetteur 2, c'est-à-dire le compteur central 5 ou le bloc rapporté 6. Elle n'a donc lieu qu'une seule fois, quel que soit le nombre de récepteur 3.

Dans certains modes de réalisation particuliers, le procédé de gestion comprend des étapes consistant à
- envoyer une information de tarif succédant au tarif en vigueur 105, avec ou sans fil, depuis l'émetteur 2, et à l'au moins un récepteur 3, cette étape étant mise en oeuvre dès qu'un changement intervient pour au moins le tarif en vigueur ou le tarif succédant au tarif en vigueur, puis à
- mémoriser l'information de tarif succédant au tarif en vigueur 106, et
- signaler le tarif succédant au tarif en vigueur 107, dans les locaux 16, notamment au niveau du au moins un récepteur 3, à l'aide d'au moins un indicateur 4,
ledit tarif succédant au tarif en vigueur provenant du compteur central 5. Il est ainsi possible à l'utilisateur de mieux organiser l'usage de ses consommateurs électriques 7. En effet, à titre d'exemple, si le tarif en vigueur est un tarif onéreux, mais que le tarif succédant au tarif en vigueur est un tarif peu onéreux, l'utilisateur pourra choisir de différer son utilisation, alors que si le tarif succédant au tarif en vigueur est un tarif très onéreux, l'utilisateur pourra choisir d'utiliser tout de suite son consommateur électrique, pour éviter le surcoût, malgré l'existence de tarifs encore moins onéreux.

Selon une caractéristique supplémentaire de ces modes de réalisation, le procédé de gestion comprend une étape consistant à affecter un niveau tarifaire au tarif succédant au tarif en vigueur 108, l'ensemble des tarifs possibles étant découpé en un nombre restreint de niveaux tarifaires, préférentiellement trois, l'étape consistant à signaler le tarif succédant au tarif en vigueur 107 faisant appel à au moins une diode 12 et revenant alors préférentiellement à faire clignoter la au moins une diode 12 représentant le niveau tarifaire du tarif succédant au tarif en vigueur selon un code de couleur ergonomique pour un utilisateur, tel que vert pour un niveau tarifaire peu onéreux, rouge pour un niveau tarifaire très onéreux, et orange pour un niveau tarifaire intermédiaire.

L'affectation d'un niveau tarifaire pour le tarif succédant au tarif en vigueur a, par analogie, les mêmes avantages que l'affectation d'un niveau tarifaire pour le tarif en vigueur. L'avantage de la signalisation par clignotement est qu'il est alors possible de signaler simultanément et avec le même jeu de diodes 12, d'une part, le tarif en vigueur par une illumination continue, et, d'autre part, le tarif succédant au tarif en vigueur par une illumination discontinue. Le conflit entre une illumination continue et une illumination discontinue de la même diode 12 ne peut pas survenir puisque cela signifierait que le tarif en vigueur et le tarif suivant le tarif en vigueur sont paradoxalement les mêmes.

Le dispositif de gestion 1, ainsi que le procédé de gestion, traite essentiellement de la même façon le tarif en vigueur et le tarif succédant au tarif en vigueur, seule la façon de signaler l'un ou l'autre pouvant changer lorsque le même indicateur 4 est utilisé. Lorsque qu'une console centrale est utilisée, l'indicateur 4 est formé par son écran, et signaler ces deux tarifs différemment ne pose évidemment alors pas de problème. Lorsque l'indicateur 4 est formé par une ou quelques diodes 12, il peut aussi être envisagé d'intégrer à la fois un indicateur 4 pour le tarif en vigueur et un indicateur 4 pour le tarif succédant au tarif en vigueur, bien que cela ait des conséquences directes sur le coût et sur la consommation électrique d'un composant autonome 8 intégrant ces deux indicateurs 4, le cas échéant.

De plus, selon une caractéristique additionnelle possible, le procédé de gestion comprend une étape d'alimentation électrique consistant essentiellement à transformer, au moyen d'une cellule photovoltaïque 9, de l'énergie lumineuse en électricité destinée au moins à l'indicateur 4, et éventuellement aussi à la stocker de façon intermédiaire dans un accumulateur électrique 11. L'accumulateur électrique 11 peut ainsi fournir l'énergie électrique à l'indicateur 4 mais aussi à d'autres composants, si nécessaire, comme le processeur 17. Il est ainsi possible d'éliminer le besoin de relier de façon filaire la pièce comprenant le au moins un indicateur 4 pour lui fournir de l'énergie électrique : composant autonome 8, prise gigogne, socle mural ou autre.

Selon une caractéristique additionnelle possible, le procédé de gestion comprend une étape consistant à éteindre 109 la au moins une diode 12 après une durée d'illumination prédéfinie par une temporisation 112, au moins l'étape consistant à signaler le tarif en vigueur 102, ou l'étape consistant à signaler le tarif succédant au tarif en vigueur 107, n'étant mise en oeuvre que suite à une détection d'ordre 111, notamment suite à une variation rapide de la luminosité à proximité du au moins un indicateur 4 et détectée par un élément photosensible telle que la cellule photovoltaïque 9.

Une telle variation rapide représente une baisse de l'intensité lumineuse à proximité de la au moins une diode 12, cette baisse étant plus rapide, et éventuellement aussi plus ample, qu'une baisse due à l'extinction d'une source de lumière artificielle, ou à la diminution de la lumière du jour. La variation de luminosité à proximité de la au moins une diode 12 formant le au moins un indicateur 4 peut être l'effet du passage de la main de l'utilisateur, et peut être détecté par la variation subite de la puissance fournie par la cellule photoélectrique 9, ce qui permet de réaliser, avec un seul composant qu'est ladite cellule photoélectrique 9, tant la fourniture d'énergie électrique pour, entre autres, le au moins un indicateur 4, que l'identification d'un ordre de signalisation. Le processeur 17 détecte donc la variation de puissance fournie par la cellule photoélectrique 9 et identifie un ordre pour signaler le tarif en vigueur et/ou le tarif succédant au tarif en vigueur.

L'extinction 109 de la diode 12, et, de façon générale, l'extinction 109 du au moins un indicateur 4, a naturellement pour effet de réduire le besoin en énergie. Il est alors possible d'intégrer le au moins un indicateur 4, sous la forme d'au moins une diode 12, dans un composant autonome 8 qui s'alimente grâce à une cellule photovoltaïque 9 de superficie réduite puisque le au moins un indicateur 4 n'est illuminé qu'après détection d'un ordre 111 et pendant une durée d'illumination prédéfinie par une temporisation 112.

Pour permettre à l'utilisateur de mieux maîtriser sa consommation électrique sans devoir constamment surveiller l'évolution des tarifs, il peut être envisagé d'empêcher une fourniture d'énergie, par un dispositif de gestion 1 compatible avec cette fonction de transmission d'énergie électrique, dès lors que le tarif en vigueur dépasse un seuil tarifaire que l'utilisateur peut avoir prédéfini. Pour éviter toutefois des éventuelles conséquences néfastes de l'arrêt brutal d'une transmission d'énergie en cours, par exemple un cycle d'une machine à laver ou l'utilisation d'un four électrique, et selon une autre caractéristique additionnelle possible, le procédé comprend une étape consistant à empêcher le démarrage d'une transmission d'énergie 110 si le tarif en vigueur est au-delà d'un certain seuil tarifaire. Ainsi, une transmission d'énergie ne sera pas stoppée si le tarif en vigueur devient supérieur au seuil tarifaire alors même que la transmission est en cours, mais dès que cette transmission d'énergie sera terminée, il sera impossible d'en initier une nouvelle. Il reste bien sûr la possibilité à l'utilisateur de définir alors volontairement un nouveau seuil tarifaire pour forcer la transmission. Il est aussi possible que le dispositif de gestion 1 comprenne plusieurs moyens de réglage 14, chacun lié à un commutateur électrique 13 intégré dans une transmission d'énergie électrique, et réglé avec un seuil tarifaire différent.

## Revendications

1. Dispositif de gestion (1) d'une installation de fourniture d'électricité pour des locaux (16), tels que des locaux d'habitation, qui comprend
- un émetteur (2), situé au niveau d'un compteur central (5) de ladite installation et apte à envoyer une information de tarif en vigueur (101) sans fil,
- au moins un récepteur (3), situé dans lesdits locaux (16), apte à recevoir ladite information, ainsi qu'
- au moins un indicateur (4) apte à signaler le tarif en vigueur (102), dans lesdits locaux (16), au niveau dudit au moins un récepteur (3),
le tarif en vigueur provenant du compteur central (5),
dispositif **caractérisé en ce que**
l'au moins un récepteur (3) et l'au moins un indicateur (4) sont indépendants d'un consommateur électrique (7) de l'installation électrique, et sont ainsi montés ensemble l'un et l'autre dans un composant autonome (8) déplaçable, ne présentant aucune connexion filaire.

2. Dispositif de gestion (1) selon la revendication 1, **caractérisé**
**en ce que** l'émetteur (2) est intégré dans un bloc rapporté (6), rapporté au compteur central (5) et apte à réceptionner, avec ou sans fil, les données de tarif fournies par ce dernier, ainsi qu'à affecter un niveau tarifaire à un tarif,
et **en ce que**
l'émetteur (2) et le au moins un récepteur (3) sont aptes à communiquer ensemble sans fils.

3. Dispositif de gestion (1) selon la revendication 2, **caractérisé en ce que** le dispositif de gestion (1) comprend au moins un composant autonome (8), aisément déplaçable, intégrant le au moins un récepteur (3), une cellule photovoltaïque (9), une mémoire (10), un accumulateur électrique (11) ainsi qu'au moins une diode (12) formant le ou un indicateur (4), et préférentiellement trois diodes (12) de couleurs différentes aptes à indiquer un niveau tarifaire grâce à leur éclairement et à un code couleur ergonomique pour un utilisateur.

4. Dispositif de gestion (1) selon la revendication 3, **caractérisé en ce que** le au moins un composant autonome (8) présente une surface adhésive à l'opposé du au moins un indicateur (4) qu'il comprend, lui permettant ainsi d'être fixé dans l'environnement immédiat d'un consommateur électrique (7), voire contre une de ses parois, de sorte à être aisément visible par un utilisateur dudit consommateur électrique (7).

5. Dispositif de gestion (1) selon l'une quelconque des revendications 1 à 4, **caractérisé en ce qu'**il est apte à transmettre de l'énergie électrique et comprend au moins un commutateur électrique (13), tel qu'un relais ou un commutateur de puissance statique, conditionnant une transmission électrique, ainsi qu'au moins un moyen de réglage (14) d'un seuil tarifaire au-dessus duquel le au moins un commutateur électrique (13) est placé dans une position dans laquelle la transmission qu'il conditionne est impossible, notamment dès lors que, en outre, le courant transmis est nul.

6. Dispositif de gestion (1) selon la revendication 5, **caractérisé en ce qu'**il comprend au moins un bloc électrique (15) à double enfichage, apte à transmettre de l'énergie électrique, du type prise gigogne ou bloc multiprise, intégrant le au moins un récepteur (3), le au moins un indicateur (4), le au moins un commutateur électrique (13), et le au moins un moyen de réglage (14).

7. Procédé de gestion d'une installation de fourniture d'électricité pour des locaux (16), tels que des locaux d'habitation, pour piloter un dispositif de gestion (1) selon l'une quelconque des revendications 1 à 6, **caractérisé en ce qu'**il comprend des étapes consistant à :
- envoyer une information de tarif en vigueur (101), avec ou sans fil, depuis un émetteur (2) situé au niveau d'un compteur central (5) de ladite installation et à au moins un récepteur (3) situé dans lesdits locaux (16), et
- signaler le tarif en vigueur (102), dans lesdits locaux (16), notamment au niveau dudit au moins un récepteur (3), à l'aide d'au moins un indicateur (4),
ledit tarif en vigueur provenant dudit compteur central (5)
et **en ce qu'**il comprend des étapes consistant à
- envoyer une information de tarif succédant au tarif en vigueur (105), avec ou sans fil, depuis l'émetteur (2), et à l'au moins un récepteur (3), cette étape étant mise en oeuvre dès qu'un changement intervient pour au moins le tarif en vigueur ou le tarif succédant au tarif en vigueur, puis à
- mémoriser l'information de tarif succédant au tarif en vigueur (106), et
- signaler le tarif succédant au tarif en vigueur (107), dans les locaux (16), notamment au niveau du au moins un récepteur (3), à l'aide d'au moins un indicateur (4),
ledit tarif succédant au tarif en vigueur provenant du compteur central (5).

8. Procédé de gestion selon la revendication 7, **caractérisé en ce que** l'envoi d'une information de tarif en vigueur (101) est réalisé dès lors que le tarif en vigueur change, le procédé comprenant, en outre, une étape ultérieure consistant à mémoriser l'information de tarif en vigueur (103).

9. Procédé de gestion selon l'une quelconque des revendications 7 ou 8, **caractérisé en ce qu'**il comprend une étape consistant à affecter un niveau tarifaire au tarif en vigueur (104), l'ensemble des tarifs possibles étant découpé en un nombre restreint de niveaux tarifaires, notamment entre deux et cinq, et préférentiellement trois.

10. Procédé de gestion selon la revendication 9, **caractérisé en ce que** l'étape consistant à signaler le tarif en vigueur (102) fait appel à au moins une diode (12), et revient notamment à allumer la au moins une diode (12) représentant le niveau tarifaire du tarif en vigueur selon un code de couleur ergonomique pour un utilisateur, tel que vert pour un niveau tarifaire peu onéreux, rouge pour un niveau tarifaire très onéreux, et orange pour un niveau tarifaire intermédiaire.

11. Procédé de gestion selon l'une quelconque des revendications 9 ou 10, **caractérisé en ce que** l'étape consistant à affecter un niveau tarifaire au tarif en vigueur (104) est réalisé préalablement à l'étape consistant à envoyer une information de tarif en vigueur (101), ladite information de tarif en vigueur envoyée correspondant alors audit niveau tarifaire.

12. Procédé de gestion selon la revendication 11, **caractérisé en ce qu'**
il comprend une étape consistant à affecter un niveau tarifaire au tarif succédant au tarif en vigueur (108), l'ensemble des tarifs possibles étant découpé en un nombre restreint de niveaux tarifaires, préférentiellement trois, l'étape consistant à signaler le tarif succédant au tarif en vigueur (107) faisant appel à au moins une diode (12) et revenant alors préférentiellement à faire clignoter la au moins une diode (12) représentant le niveau tarifaire du tarif succédant au tarif en vigueur selon un code de couleur ergonomique pour un utilisateur, tel que vert pour un niveau tarifaire peu onéreux, rouge pour un niveau tarifaire très onéreux, et orange pour un niveau tarifaire intermédiaire.

13. Procédé de gestion selon l'une quelconque des revendications 7 à 12, **caractérisé en ce qu'**il comprend une étape d'alimentation électrique consistant essentiellement à transformer, au moyen d'une cellule photovoltaïque (9), de l'énergie lumineuse en électricité destinée au moins à l'indicateur (4), et éventuellement aussi à la stocker de façon intermédiaire dans un accumulateur électrique (11).

14. Procédé de gestion selon l'une quelconque des revendications 10 ou 12 et selon la revendication 13, **caractérisé en ce qu'**il comprend une étape consistant à éteindre (109) la au moins une diode (12) après une durée d'illumination prédéfinie par une temporisation (112), au moins l'étape consistant à signaler le tarif en vigueur (102), ou l'étape consistant à signaler le tarif succédant au tarif en vigueur (107), n'étant mise en oeuvre que suite à une détection d'ordre (111), notamment suite à une variation rapide de la luminosité à proximité du au moins un indicateur (4) et détectée par un élément photosensible telle que la cellule photovoltaïque (9).

15. Procédé de gestion selon l'une quelconque des revendications 7 à 13, **caractérisé en ce qu'**il comprend une étape consistant à empêcher le démarrage d'une transmission d'énergie (110) si le tarif en vigueur est au-delà d'un certain seuil tarifaire.

## Patentansprüche

1. Verwaltungsvorrichtung (1) einer Elektrizitätsversorgungsanlage für Räume (16), wie Wohnräume, die Folgendes enthält:
- einen Sender (2), der sich im Bereich eines Zentralzählers (5) der Anlage befindet und eine Information über den geltenden Tarif (101) drahtlos senden kann,
- mindestens einen in den Räumen (16) befindlichen Empfänger (3), der die Information empfangen kann, sowie
- mindestens ein Anzeigegerät (4), das den geltenden Tarif (102) in den Räumen (16) im Bereich des mindestens einen Empfängers (3) angeben kann,
wobei der geltende Tarif vom Zentralzähler (5) stammt,
wobei die Vorrichtung **dadurch gekennzeichnet ist, dass**
der mindestens eine Empfänger (3) und das mindestens eine Anzeigegerät (4) von einem elektrischen Verbraucher (7) der elektrischen Anlage unabhängig sind, und so zusammen beide in ein bewegliches autonomes Bauteil (8), das keine Drahtverbindung aufweist, montiert sind.

2. Verwaltungsvorrichtung (1) nach Anspruch 1, **dadurch gekennzeichnet, dass**
der Sender (2) in einen angefügten Block (6) eingebaut ist, der an den Zentralzähler (5) angefügt ist und drahtgebunden oder drahtlos die von diesem letzteren gelieferten Tarifdaten empfangen sowie einem Tarif ein Tarifniveau zuweisen kann, und dass
der Sender (2) und der mindestens eine Empfänger (3) drahtlos miteinander kommunizieren können.

3. Verwaltungsvorrichtung (1) nach Anspruch 2, **dadurch gekennzeichnet, dass** die Verwaltungsvorrichtung (1) mindestens ein ohne weiteres bewegliches autonomes Bauteil (8) enthält, das den mindestens einen Empfänger (3), eine Photovoltaikzelle (9), einen Speicher (10), einen elektrischen Akkumulator (11) sowie mindestens eine Diode (12), die das oder ein Anzeigegerät (4) bildet, und vorzugsweise drei Dioden (12) unterschiedlicher Farben, enthält, die aufgrund ihrer Beleuchtung und eines ergonomischen Farbcodes einem Benutzer ein Tarifniveau anzeigen können.

4. Verwaltungsvorrichtung (1) nach Anspruch 3, **dadurch gekennzeichnet, dass** das mindestens eine autonome Bauteil (8) eine haftende Fläche entgegengesetzt zum mindestens einen Anzeigegerät (4) aufweist, das es umfasst, die es ihm so ermöglicht, in der direkten Umgebung eines elektrischen Verbrauchers (7) oder sogar an einer seiner Wände befestigt zu sein, um für einen Benutzer des elektrischen Verbrauchers (7) bequem sichtbar zu sein.

5. Verwaltungsvorrichtung (1) nach einem der Ansprüche 1 bis 4, **dadurch gekennzeichnet, dass** sie elektrische Energie übertragen kann und mindestens einen elektrischen Schalter (13) wie ein Relais oder einen statischen Leistungsschalter, der eine elektrische Übertragung konditioniert, sowie mindestens eine Einstelleinrichtung (14) einer Tarifschwelle enthält, oberhalb der der mindestens eine elektrische Schalter (13) in einer Stellung angeordnet ist, in der die Übertragung, die er konditioniert, unmöglich ist, insbesondere dann, wenn außerdem der übertragene Strom gleich Null ist.

6. Verwaltungsvorrichtung (1) nach Anspruch 5, **dadurch gekennzeichnet, dass** sie mindestens einen elektrischen Block (15) mit doppelter Steckerverbindung enthält, der elektrische Energie übertragen kann, von der Art Zwischenstecker oder Mehrfachsteckerblock, in den der mindestens eine Empfänger (3), das mindestens eine Anzeigegerät (4), der mindestens eine elektrische Schalter (13) und die mindestens eine Einstelleinrichtung (14) eingebaut sind.

7. Verfahren zur Verwaltung einer Elektrizitätsversorgungsanlage für Räume (16), wie Wohnräume, zum Ansteuern einer Verwaltungsvorrichtung (1) nach einem der Ansprüche 1 bis 6, **dadurch gekennzeichnet, dass** es Schritte enthält, die darin bestehen:
- eine Information über den geltenden Tarif (101) drahtgebunden oder drahtlos ausgehend von einem Sender (2), der sich im Bereich eines Zentralzählers (5) der Anlage befindet, und an mindestens einen Empfänger (3), der sich in den Räumen (16) befindet, zu senden, und
- den in den Räumen (16), insbesondere im Bereich des mindestens einen Empfängers (3), geltenden Tarif (102) mit Hilfe mindestens eines Anzeigegeräts (4) anzugeben,
wobei der geltende Tarif vom Zentralzähler (5) stammt,
und dass es Schritte enthält, die darin bestehen
- eine Information über den auf den geltenden Tarif (105) folgenden Tarif ausgehend vom Sender (2) und an den mindestens einen Empfänger (3) drahtgebunden oder drahtlos zu senden, wobei dieser Schritt durchgeführt wird, sobald eine Änderung für mindestens den geltenden Tarif oder den auf den geltenden Tarif folgenden Tarif eintritt, dann
- die auf den geltenden Tarif (106) folgende Tarifinformation zu speichern, und
- den auf den geltenden Tarif (107) folgenden Tarif in den Räumen (16), insbesondere im Bereich des mindestens einen Empfängers (3), mit Hilfe mindestens eines Anzeigegeräts (4) anzugeben,
wobei der auf den geltenden Tarif folgende Tarif vom Zentralzähler (5) stammt.

8. Verwaltungsverfahren nach Anspruch 7, **dadurch gekennzeichnet, dass** das Senden einer Information über den geltenden Tarif (101) ausgeführt wird, sobald der geltende Tarif sich ändert, wobei das Verfahren außerdem einen späteren Schritt enthält, der darin besteht, die geltende Tarifinformation (103) zu speichern.

9. Verwaltungsverfahren nach einem der Ansprüche 7 oder 8, **dadurch gekennzeichnet, dass** es einen Schritt enthält, der darin besteht, dem geltenden Tarif (104) ein Tarifniveau zuzuweisen, wobei die Gesamtheit der möglichen Tarife in eine begrenzte Anzahl von Tarifniveaus aufgeteilt ist, insbesondere zwischen zwei und fünf, und vorzugsweise drei.

10. Verwaltungsverfahren nach Anspruch 9, **dadurch gekennzeichnet, dass** der Schritt, der darin besteht, den geltenden Tarif (102) anzugeben, auf mindestens eine Diode (12) zurückgreift, und insbesondere darauf hinausläuft, die mindestens eine Diode (12), die das Tarifniveau des geltenden Tarifs darstellt, gemäß einem ergonomischen Farbcode für einen Benutzer einzuschalten, wie grün für ein kostengünstiges Tarifniveau, rot für ein sehr teures Tarifniveau und orange für ein dazwischen liegendes Tarifniveau.

11. Verwaltungsverfahren nach einem der Ansprüche 9 oder 10, **dadurch gekennzeichnet, dass** der Schritt, der darin besteht, dem geltenden Tarif (104) ein Tarifniveau zuzuweisen, vor dem Schritt durchgeführt wird, der darin besteht, eine Information über den geltenden Tarif (101) zu senden, wobei die gesendete geltende Tarifinformation dann dem Tarifniveau entspricht.

12. Verwaltungsverfahren nach Anspruch 11, **dadurch gekennzeichnet, dass**
es einen Schritt enthält, der darin besteht, dem auf den geltenden Tarif (108) folgenden Tarif ein Tarifniveau zuzuweisen, wobei die Gesamtheit der möglichen Tarife in eine begrenzte Anzahl von Tarifniveaus, vorzugsweise drei, aufgeteilt ist, wobei der Schritt darin besteht, den auf den geltenden Tarif (107) folgenden Tarif unter Verwendung mindestens einer Diode (12) anzugeben, und dann vorzugsweise darauf hinausläuft, die mindestens eine Diode (12), die das Tarifniveau des auf den geltenden Tarif folgenden Tarifs darstellt, gemäß einem ergonomischen Farbcode für einen Benutzer blinken zu lassen, wie grün für ein kostengünstiges Tarifniveau, rot für ein sehr teures Tarifniveau, und orange für ein dazwischen liegendes Tarifniveau.

13. Verwaltungsverfahren nach einem der Ansprüche 7 bis 12, **dadurch gekennzeichnet, dass** es einen Schritt der elektrischen Versorgung enthält, der hauptsächlich darin besteht, mittels einer Photovoltaikzelle (9) Lichtenergie in Elektrizität umzuwandeln, die zumindest für das Anzeigegerät (4) bestimmt ist, und sie ggf. auch in einem elektrischen Akkumulator (11) zwischenzuspeichern.

14. Verwaltungsverfahren nach einem der Ansprüche 10 oder 12 und nach Anspruch 13, **dadurch gekennzeichnet, dass** es einen Schritt enthält, der darin besteht, die mindestens eine Diode (12) nach einer durch eine Verzögerung (112) vorbestimmten Beleuchtungsdauer auszuschalten (109), wobei mindestens der Schritt, der darin besteht, den geltenden Tarif (102) anzugeben, oder der Schritt, der darin besteht, den auf den geltenden Tarif (107) folgenden Tarif anzugeben, nur nach einer Befehlserfassung (111), insbesondere nach einer schnellen Änderung der Leuchtstärke in der Nähe des mindestens einen Anzeigegeräts (4) und erfasst von einem lichtempfindlichen Element wie der Photovoltaikzelle (9), durchgeführt wird.

15. Verwaltungsverfahren nach einem der Ansprüche 7 bis 13, **dadurch gekennzeichnet, dass** es einen Schritt enthält, der darin besteht, den Start einer Energieübertragung (110) zu verhindern, wenn der geltende Tarif sich jenseits einer bestimmten Tarifschwelle befindet.

## Claims

1. Device for managing (1) an installation for providing electricity for premises (16), such as residential premises, which comprises
- a transmitter (2), located in a central meter (5) of said installation and capable of sending information about the current tariff (101) wirelessly,
- at least one receiver (3), installed in said premises (16), capable of receiving said information, as well as
- at least one indicator (4) which is capable of signalling the current tariff (102) in said premises (16) in particular in said at least one receiver (3),
the current tariff coming from the central meter (5),
the device being **characterised in that**
the at least one receiver (3) and the at least on indicator (4) are independent of an electric consumer unit (7) of the electrical installation and are thus both mounted together in a displaceable autonomous component (8) which does not have any wired connection.

2. Managing device (1) according to claim 1, **characterised in that** the transmitter (2) is integrated into an attachable unit (6), attached to the central meter (5) and capable of receiving, by wire or wirelessly, tariff data provided by the latter, as well as assigning a tariff level to a tariff,
and **in that**
the transmitter (2) and the at least one receiver (3) are able to communicate with one another wirelessly.

3. Managing device (1) according to claim 2, **characterised in that** the managing device (1) comprises at least one autonomous component (8), which is easily displaceable, integrating the at least one receiver (3), a photovoltaic cell (9), a memory (10), an electric accumulator (11) as well as at least one diode (12) forming the or an indicator (4), and preferably three diodes (12) of different colours which are able to indicate a tariff level to a user from their illumination and an ergonomic colour code.

4. Managing device (1) according to claim 3, **characterised in that** the at least one autonomous component (8) has an adhesive surface opposite the at least one indicator (4) which it comprises, enabling it to be fixed in the immediate environment of an electric consumer unit (7), possibly against one of its walls, so as to be easily visible by a user of said electrical consumer unit (7).

5. Managing device (1) according to any of claims 1 to 4, **characterised in that** it is able to transmit electric power and comprises at least one electric switch (13), such as a relay or a static power switch, depending on electric transmission, as well as at least one means (14) for adjusting a tariff threshold above which the at least one electric switch (13) is put in a position in which the transmission that it determines is impossible, particularly since in addition the current transmitted is zero.

6. Managing device (1) according to claim 5, **characterised in that** it comprises at least one electric unit (15) with a double plug-in unit, able to transmit electrical power, of the plug adapter type or multi-socket unit, integrating the at least one receiver (3), the at least one indicator (4), the at least one electric switch (13), and the at least one adjusting means (14).

7. Method of managing an installation for providing electricity for premises (16), such as residential premises, for controlling a managing device (1) according to any of claims 1 to 6, **characterised in that** it comprises steps consisting of:
- sending information on the current tariff (101), by wire or wirelessly, from a transmitter (2) located in a central meter (5) of said installation and to at least one receiver (3) situated in said premises (16), and
- signalling the current tariff (102) in said premises (16), in particular on said at least one receiver (3), by means of at least one indicator (4),
said current tariff coming from the central meter (5),
and **in that** it comprises steps consisting of
- sending information on the tariff succeeding the current tariff (105), by wire or wirelessly, from the transmitter (2) and to the at least one receiver (3), said step being implemented as soon as there is a change of at least the current tariff or the tariff succeeding the current tariff, then
- storing the information on the tariff succeeding the current tariff (106), and
- signalling the tariff succeeding the current tariff (107) in the premises, in particular in at least one receiver (3), by means of at least one indicator (4),
said tariff succeeding the current tariff coming from the central meter (5).

8. Managing method according to claim 7, **characterised in that** the transmission of information on the current tariff (101) is performed as soon as the current tariff changes, the method also comprising a subsequent step of storing information on the current tariff (103).

9. Managing method according to any of claims 7 or 8, **characterised in that** it comprises a step of assigning a tariff level to the current tariff (104), all of the possible tariffs being divided into a limited number of tariff levels, in particular between two and five and preferably three.

10. Managing method according to claim 9, **characterised in that** the step of signalling the current tariff (102) involves at least one diode (12), and in particular the illumination of the at least one diode (12) representing the tariff level of the current tariff according to an ergonomic colour code for a user, such as green for a less expensive tariff level, red for a very expensive tariff level and orange for an intermediate tariff level.

11. Managing method according to any of claims 9 or 10, **characterised in that** the step of assigning a tariff level to the current tariff (104) is performed before the step of sending information on the current tariff (101), the sent information on the current tariff then corresponding to said tariff level.

12. Managing method according to claim 11, **characterised in that**
it comprises a step of assigning a tariff level to the tariff succeeding the current tariff (108), all of the possible tariffs being divided into a limited number of tariff levels, preferably three, the step of signalling the tariff succeeding the current tariff (107) involving at least one diode (12) and preferably the flashing of the at least one diode (12) representing the tariff level of the tariff succeeding the current tariff according to an ergonomic colour code for a user, such as green for a less expensive tariff level, red for a very expensive tariff level and orange for an intermediate tariff level.

13. Managing method according to any of claims 7 to 12, **characterised in that** it comprises a step of supplying electric power consisting essentially of transforming, by means of a photovoltaic cell (9), light energy into electricity intended for at least the indicator (4), and possibly also storing it temporarily in an electric accumulator (11).

14. Managing method according to any of claims 10 or 12 and according to claim 13, **characterised in that** it comprises a step of switching off (109) the at least one diode (12) after a predefined period of illumination after a time delay (112), at least the step of signalling the current tariff (102), or the step of signalling the tariff succeeding the current tariff (107), only being implemented after the detection of a command (111), in particular following a rapid variation in the brightness close to at least one indicator (4) and detected by a photosensitive element such as the photovoltaic cell (9).

15. Managing method according to any of claims 7 to 13, **characterised in that** it comprises a step of preventing the start-up of a transmission of power (110) if the current tariff is beyond a certain threshold tariff.
